Europäisches Patentamt

European Patent Office

Office européen des brevets

(19)

(11) Veröffentlichungsnummer: **0 101 842**
**A2**

(12) **EUROPÄISCHE PATENTANMELDUNG**

(21) Anmeldenummer: 83106674.1

(22) Anmeldetag: 07.07.83

(51) Int. Cl.³: **G 02 B 7/26**

(30) Priorität: 28.07.82 DE 3228219

(43) Veröffentlichungstag der Anmeldung:
07.03.84 Patentblatt 84/10

(84) Benannte Vertragsstaaten:
CH DE FR GB LI

(71) Anmelder: SIEMENS AKTIENGESELLSCHAFT
Berlin und München Wittelsbacherplatz 2
D-8000 München 2(DE)

(72) Erfinder: Michel, Herbert
Bacherstrasse 49
D-8000 München 90(DE)

(72) Erfinder: Reichelt, Achim, Dipl.-Phys.
Queristrasse 4
D-8025 Unterhaching(DE)

(54) Faseroptischer Koppler mit Kernanschliff.

(57) Es wird ein asymmetrischer 3-Tor-Koppler beschrieben, mit dem ein Teilnehmer eines optischen Sternbussystems, das einen Reflexionsmischer enthält, Informationen in das Sternnetz einkoppeln bzw. aus dem System empfangen kann. Der Koppler besteht aus einer unter dem Winkel von ca. 1° zur Faserachse angeschliffenen Dickkernfaser (1), an deren geschliffener Fläche (10) eine dünnere Faser (2) mit einer geringeren Manteldicke angelegt und angeklebt ist. Die gemeinsame Stirnfläche (12) der verklebten Fasern ist soweit abgeschliffen und abpoliert, daß die Höhe (H) des angeschliffenen Dickkernfaserkerns zusammen mit dem Durchmesser (d) der dünnen Faser wieder etwa dem gesamten Durchmesser (D) des Kerns (11) der Dickkernfaser (1) entspricht. Bei der Ankopplung einer Dickkernfaser des Bussystems in diese Stirnfläche (12) kann Licht über die dünne Faser in das Bussystem eingekoppelt und über die angeschliffene Dickkernfaser (1) aus dem Bus ausgekoppelt werden.

FIG 1

EP 0 101 842 A2

SIEMENS AKTIENGESELLSCHAFT           Unser Zeichen
Berlin und München                   VPA 82 P 1 5 9 7 E

Faseroptischer Koppler mit Kernanschliff

Die vorliegende Erfindung betrifft gemäß dem Oberbegriff des Patentanspruchs 1 einen faseroptischen Koppler mit Kernanschliff.

Für den Aufbau von Verteilnetzen und Bussystemen mit Glasfasern zur optischen Nachrichten- und Datenübertragung werden einfach herzustellende Koppelelemente benötigt, mit denen ein Teilnehmer optische Information in die Übertragungsstrecke einkoppeln bzw. einen Teil der Strahlungsleistung aus dem Streckennetz auskoppeln kann. Da bei Datenbussystemen zum Computerverbund oder bei Meß- und Regelkreisen in Bordnetzen keine extrem hohen Datenraten auftreten bzw. keine großen Strecken überbrückt werden müssen, können als Streckenfasern Stufenfasern mit relativ großem Kerndurchmesser und hoher numerischer Apertur verwendet werden. Diese Fasern sind verhältnismäßig preisgünstig und erlauben die Wahl größerer Toleranzen bei der Herstellung von Stecker- und Verzweigerelementen. Als Koppelelemente für Bussysteme mit Dickkernfasern sind der Oberflächen- oder Taperkoppler (siehe dazu E. Weidel, J. Wengel: T-Koppler für die optische Datenübertragung, Wiss. Bericht, AEG-Telefunken 53 (1980) 1-2, 17-22), der symmetrische Faserversatzkoppler bzw. - als eine verbesserte Version - der asymmetrische Faserversatzkoppler (siehe dazu H.H. Witte: Passive T-Bus with Asymmetrical 4-Port Couplers. Fiber and Integrated Optics 3 (1980) 253-261 und H.H. Witte, V. Kulich: Branching elements for optical data

Ed 1 Sti/28.7.82

buses. Appl. Opt. 20 (1981) 715-718) sowie ein
asymmetrischer Koppler mit V-Nut-Faser (siehe dazu E.
Weidel, J. Guttmann: Asymetric T-Couplers for Fibre
Optic Data Buses. Electr. Lett. 16 (1980) No. 17,
673-674) entwickelt worden.

Ein Koppler mit Kernanschliff in Form eines Abzweigs für
Lichtleitfasern ist aus U. Kalmbach, D. Rittich: Abzweig
für Lichtleitfasern, NTZ 31 (1978) 423-425 bekannt.

Aufgabe der vorliegenden Erfindung ist es, einen Koppler
der eingangs genannten Art anzugeben, mit dem ein Teilnehmer eines optischen Sternbusses, der einen
Reflexionsmischer enthält bzw. eines optischen T-Busses
Informationen in den Bus einkoppeln bzw. aus dem
Bussystem empfangen kann.

Diese Aufgabe wird durch die im kennzeichnenden Teil des
Patentanspruchs 1 angegebenen Merkmale gelöst.

Der erfindungsgemäße Koppler soll im folgenden auch als
asymmetrischer Koppler bezeichnet werden, da zum Aufbau
des Kopplers Fasern mit unterschiedlichen Durchmessern
verwendet werden.

Bevorzugte und vorteilhafte Ausführungsformen und
Verfahren zur Herstellung des erfindungsgemäßen Kopplers
gehen aus den Unteransprüchen hervor.

Die Erfindung wird in der folgenden Beschreibung anhand
der Figuren näher erläutert. Von den Figuren zeigen:

Figur 1 eine Seitenansicht eines schematisch dargestellten erfindungsgemäßen asymmetrischen
3-Tor-Kopplers,

Figur 2 eine Draufsicht auf die gemeinsame Stirnfläche der beiden verbundenen Fasern des 3-Tor-Kopplers, wobei die Fasern in V-Nuten von Trägerkörpern gehalten sind und die dünnere Faser eine gleichmäßige Manteldicke aufweist,

Figur 3 eine Draufsicht auf die gemeinsame Stirnfläche der beiden verbundenen Fasern eines Kopplers nach Figur 1, bei der die dünnere Faser aus einer Faser mit relativ großer Manteldicke besteht, deren Mantel auf einer Seite bis auf die geringe Manteldicke abgeschliffen ist,

Figur 4 in isometrischer Darstellung einen mehrere Koppler nach Figur 1 enthaltenden Block, aus dem Einzelkoppler abgesägt werden können, und

Figur 5 eine Seitenansicht eines schematisch dargestellten erfindungsgemäßen, asymmetrischen 4-Tor-Kopplers zusammen mit Draufsichten auf die beiden Stirnflächen dieses Kopplers.

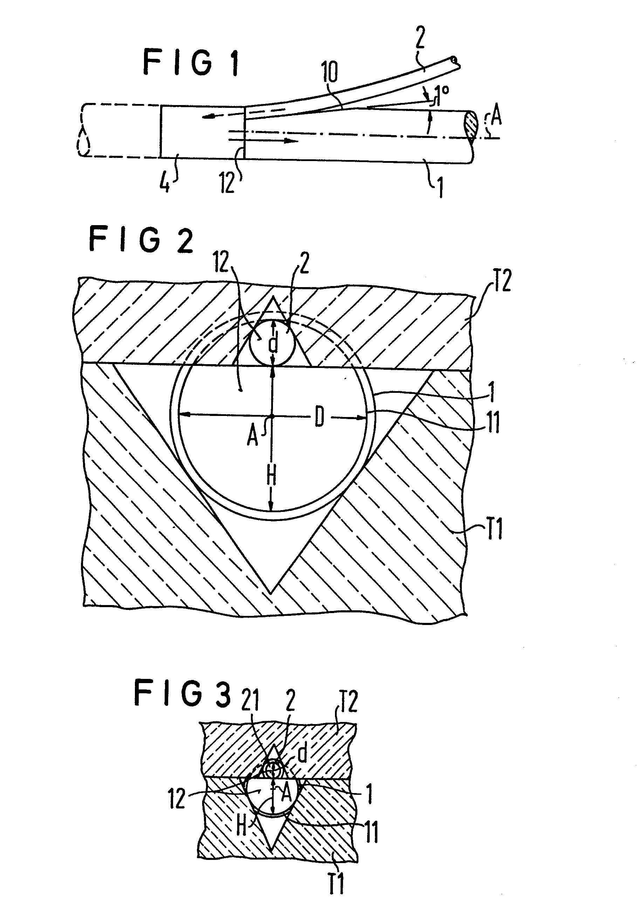

Bei dem 3-Tor-Koppler nach Figur 1 ist eine Dickkernfaser 1 mit einem Kerndurchmesser von 200 µm und einer numerischen Apertur von 0,4 an einem Ende unter einem Winkel von etwa 1° zur Faserachse angeschliffen. An die geschliffene Fläche 10 ist längseits eine dünne Stufenprofilfaser oder Stufenfaser 2 mit einem Durchmesser von 50 µm, deren gleichmäßige Manteldicke nur etwa 2 µm beträgt, angelegt und angeklebt. Im Bereich der Klebestelle ist die gemeinsamen Stirnfläche 12 der verklebten Fasern soweit abgeschliffen und abpoliert, daß die Höhe des abgeschliffenen Teils der Dickkernfaser etwa dem Durchmesser der dünnen Faser 2 entspricht.

Gemäß Figur 2 ist an der gemeinsamen Stirnfläche 12 der beiden Fasern 1 und 2 die Höhe H des angeschliffenen Kerns 11 der Dickkernfaser 1 zusammen mit dem Durchmesser d des Kerns der dünneren Faser 2 und der zwischen diesen Kernen liegenden geringen Manteldicke der dünneren Faser 2 gleich dem gesamten Durchmesser D des Kerns 11 der Dickkernfaser 1.

Wird an diese gemeinsame Stirnfläche 12 eine Dickkernfaser, die zu einem Reflexionsmischer eines Sternbussystems führt, angekoppelt, so kann einerseits über die angeschliffene Dickkernfaser 1 Licht aus dem Bussystem ausgekoppelt und zu einem Detektor geleitet werden, andererseits läßt sich Licht über die dünnere Faser 2 in die Dickkernfaser und somit in das Sternbussystem einkoppeln.

Durch die Halterung und Führung der Fasern in Siliziumfurchen kann in einem Arbeitsgang gleich eine Vielzahl derartiger Koppelelemente, beispielsweise 15 Stück oder mehr, kostengünstig hergestellt werden, ähnlich wie bei dem in der DE-OS 29 20 957 (VPA 79 P 7069 BRD) angegebenen Verfahren.

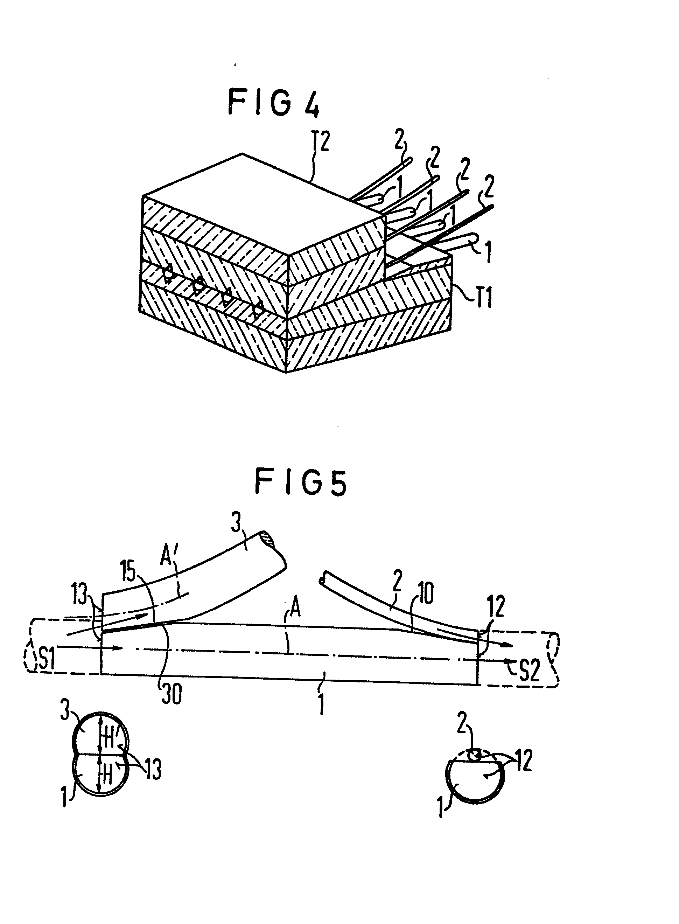

Die Figur 4 zeigt den Aufbau eines derartigen Blocksystems mit mehreren 3-Tor-Kopplern und verdeutlicht auch den Herstellungsprozeß. Zuerst werden Dickkernfasern 1 in ein Siliziumplättchen T1, das durch einen Glaskörper verstärkt ist und in das V-förmige Nuten geätzt wurden, eingelegt und eingeklebt, wobei ein dünnes Glasplättchen als Abdeckung dient. An diesem ersten Trägerkörper T1 wird ein Winkel von etwa 1° angeschliffen. In ein zweites, durch ein Glassubstrat verstärktes Siliziumplättchen T2, in das V-Furchen mit dem gleichen Abstand, aber geringerer Tiefe geätzt worden sind, werden anschließend dünnere Fasern 2 eingelegt. Hierbei wird der erste Trägerkörper oder Block T1 als Grundlage zur Halterung der dünneren Fasern 2 in den Furchen verwendet. Die Siliziumplättchen T1 und T2 werden gegeneinander verschoben, bis die Kerne beider Fasertypen übereinanderliegen, und miteinander verklebt. Die Stirnfläche des so entstandenen gesamten Blockes wird danach soweit abgeschliffen und abpoliert, bis sich der in Figur 2 skizzierte Querschnitt ergibt. Der fertige Block kann anschließend in 3-Tor-Koppler zersägt werden.

Anstelle der Siliziumplättchen können für die Halterung und Führung der Fasern auch Glaskörper oder plastisch verformbare Körper verwendet werden, in die Nuten gesägt, geschlitzt oder geprägt werden. Durch Präzisions-Heißpressen von Glas lassen sich ebenfalls Grundkörper zur Faserhalterung herstellen, die gleichzeitig Formzapfen enthalten, so daß eine nachträgliche Justierung der Flansche beim Einbau der Koppler in ein Gehäuse entfällt.

Für die hier vorgeschlagenen Koppler ergaben sich experimentell im Mittel für die Einkoppel- und Auskoppeldämpfung Werte von etwa 0,7 dB bzw. 2 dB, die durch Immersion bei der Ankopplung der Dickkernfaser um etwa 0,4 dB reduziert werden können.

Durch den Aufbau der 3-Tor-Koppler mit einer dünneren Einkoppelfaser (Stufen- oder Gradientenfaser) kann die Auskoppeldämpfung gesenkt werden. Bei Faserdurchmessern zwischen 30 und 50 µm ist der Wirkungsgrad bei der Einkopplung von Laserlicht in die Einkoppelfasern noch nahezu konstant, er sinkt aber beträchtlich bei kleineren Faserdurchmessern. Dünnere Einkoppelfasern lassen sich zudem schlechter handhaben. Es ist jedoch möglich, als Einkoppelfasern auch Stufenfasern mit kleinem Kern-, aber großem Manteldurchmesser zu verwenden. Nach dem Einlegen dieser Fasern in ein Siliziumplättchen muß dann aber der Fasermantel bis auf die geringe Manteldicke, d.h. bis nahe an den Kern, abgeschliffen werden, bevor beide Siliziumplättchen entsprechend Figur 4 miteinander verklebt werden können. Die Figur 3 zeigt eine Draufsicht auf die gemeinsame Stirnfläche der beiden Fasern eines solchen Kopplers.

Bei konfektionierten 3-Tor-Kopplern wird vor allem die Einkoppeldämpfung wesentlich durch die Qualität des Steckers und des Steckerflansches beeinflußt. Schon eine geringe Exzentrizität von Faser und Stecker und eine geringe seitliche Fehljustierung des Steckerflansches reduzieren die Lichteinkopplung über die dünnere Faser unter Umständen erheblich. Dies läßt sich vermeiden, indem an die Stirnfläche des 3-Tor-Kopplers noch ein weiteres Stück einer Dickkernfaser optimal anjustiert und angeklebt wird. In der Figur 1 ist ein solches Stück einer Dickkernfaser angedeutet und mit 4 bezeichnet. Erst an dieses Faserstück wird die zum Sternbus führende Dickkernfaser angekoppelt. Oder es werden die Steckertoleranzen bereits beim Anschleifen der Stirnfläche des Kopplers berücksichtigt, so daß auf jeden Fall eine optimale Einkopplung über die dünnere Faser, wenn auch auf Kosten der Auskoppeldämpfung, gewährleistet ist.

Durch wiederholte Anwendung des gleichen, beim Aufbau des 3-Tor-Kopplers angewandten Prinzips, lassen sich auch asymmetrische 4-Tor-Koppler herstellen, die für den Anschluß an Terminals bei T-Bussystemen benötigt werden.

In der Figur 5 ist der Aufbau eines derartigen Kopplers skizziert. Bei der Ankopplung der Systemfaser des T-Busses (Faser S1) wird der größte Teil des in der Faser geführten Lichts in die Transmissionsfaser 1 des Kopplers, eine Dickkernfaser, die an beiden Enden seitlich schräg angeschliffen ist, so daß geschliffene Flächen 10 und 15 vorhanden sind, übergekoppelt. Der restliche Lichtanteil wird über eine ebenfalls seitlich angeschliffene Faser 3 mit der geschliffenen Fläche 30 ausgekoppelt und auf einen Detektor geleitet. Der Grad des Anschliffes der Transmissionsfaser 1 bestimmt die Höhe des auszukoppelnden Lichtanteils. Die Stirnflächen 12 und 13 an den Enden des Kopplers sind unter den Enden dargestellt. Der Durchmesser und der Anschliff der Auskoppelfaser 3 sind dagegen in Grenzen variabel und werden so gewählt, daß das restliche, nicht in die Transmissionsfaser 1 übergekoppelte Licht, vollständig erfaßt wird. Am anderen Ende des Kopplers werden das Licht der Transmissionsfaser 1 sowie das vom Bus-Teilnehmer in die dünnere Fase 2 eingekoppelte Licht in die Systemfaser des T-Busses (Faser S2) weitergeleitet. Hierbei wirkt die angeschliffene Transmissionsfaser 1 wie ein Taper, so daß bei der Überkopplung des Lichts nur geringe Verluste auftreten, wie experimentell nachgewiesen werden konnte. Die Verluste beliefen sich auf 1 bis 1,5 dB.

Der beim Einbau des 4-Tor-Kopplers in das T-Bussystem auftretende gesamte Einfügeverlust wird daher im wesentlichen durch den Leistungsverlust bei der Ankopplung der beiden T-Busfasern an den Koppler bestimmt. Er beträgt etwa 2 bis 3 dB, ein Wert, der auch bei allen anderen, bisher bekannten 4-Tor-Kopplern mindestens in Kauf genommen werden muß. Durch die Führung und Halterung der Fasern in Siliziumplättchen lassen sich in einem Arbeitsgang - entsprechend dem Herstellungsprozeß des 3-Tor-Kopplers (siehe Figur 4) - gleich eine Vielzahl von 4-Tor-Kopplern kostengünstig herstellen.

19 Patentansprüche

5 Figuren

0101842

## Patentansprüche

1. Faseroptischer Koppler mit Kernanschliff, g e k e n n z e i c h n e t  d u r c h eine an einem Ende unter einem kleinen Winkel zur Faserachse (A) seitlich angeschliffene Dickkernfaser (1), an deren geschliffene Fläche (10) eine dünnere Faser (2) mit einer geringen Manteldicke angelegt und an der Dickkernfaser (1) befestigt ist, wobei an der gemeinsamen Stirnfläche (12) der beiden Fasern (1, 2) die Höhe (H) des angeschliffenen Kerns (11) der Dickkernfaser (1) zusammen mit dem Durchmesser (d) des Kerns (21) der dünneren Faser (2) und der zwischen den Kernen (11, 21) liegenden geringen Manteldicke der dünneren Faser (2) höchstens gleich dem gesamten Durchmesser (D) des Kerns (11) der Dickkernfaser (1) ist.

2. Koppler nach Anspruch 1, d a d u r c h  g e k e n n - z e i c h n e t , daß die dünnere Faser (2) eine gleichmäßige Manteldicke aufweist, und daß an der gemeinsamen Stirnfläche (12) der aneinander befestigten Fasern (1, 2) die Höhe (H) des angeschliffenen Kerns (11) der Dickkernfaser (1) zusammen mit dem Durchmesser (d) der dünneren Faser (2) dem gesamten Durchmesser (D) des Kerns (11) der Dickkernfaser (1) entspricht.

3. Koppler nach Anspruch 1, d a d u r c h  g e - k e n n z e i c h n e t , daß die dünnere Faser (2) aus einer Faser mit relativ großer Manteldicke besteht, deren Mantel auf einer Seite bis auf die geringe Manteldicke abgeschliffen ist.

4. Koppler nach einem der vorhergehenden Ansprüche, d a d u r c h  g e k e n n z e i c h n e t , daß der kleine Winkel zur Faserachse (A) etwa 1° beträgt.

5. Koppler nach einem der vorhergehenden Ansprüche, d a d u r c h   g e k e n n z e i c h n e t , daß die dünnere Faser (2) mit der geringen Manteldicke an die Dickkernfaser (1) angeklebt ist.

6. Koppler nach einem der vorhergehenden Ansprüche, d a d u r c h   g e k e n n z e i c h n e t , daß der Durchmesser des Kerns (11) der Dickkernfaser (1) etwa 150 - 500 µm beträgt, und daß die dünnere Faser (2) eine geringe Manteldicke von nur etwa 1 bis 5 µm aufweist.

7. Koppler nach einem der vorhergehenden Ansprüche, insbesondere nach Anspruch 6, d a d u r c h   g e k e n n z e i c h n e t , daß die dünnere Faser (2) einen Durchmesser von 30 bis 50 µm aufweist.

8. Koppler nach einem der vorhergehenden Ansprüche, d a d u r c h   g e k e n n z e i c h n e t , daß die Dickkernfaser (1) auch am anderen Ende unter einem Winkel zur Faserachse (A) seitlich so angeschliffen ist, daß ihr Kern (11) mit angeschliffen ist, und daß an die geschliffene Fläche (15) an diesem anderen Ende der Dickkernfaser (1) eine weitere Faser (3) angelegt und an der Dickkernfaser (1) befestigt ist.

9. Koppler nach Anspruch 8, d a d u r c h   g e k e n n z e i c h n e t , daß auch die weitere Faser (3) unter einem Winkel zu ihrer Faserachse (A') seitlich angeschliffen ist und mit ihrer geschliffenen Fläche (30) an der geschliffenen Fläche (15) am anderen Ende der Dickkernfaser (1) anliegt und daß in der gemeinsamen Stirnfläche (13) dieser beiden Fasern (1, 3) die Breite der seitlichen angeschliffenen Fläche des Kerns (31) der weiteren Faser (3) etwa der Breite der seitlichen angeschliffenen Fläche des Kerns (11) der Dickkernfaser (1) entspricht.

0101842

10. Koppler nach Anspruch 8 oder 9, d a d u r c h
g e k e n n z e i c h n e t , daß die Höhe (H) des
angeschliffenen Kerns (11) der Dickkernfaser (1)
zusammen mit der Höhe (H') des angeschliffenen Kerns
(31) der weiteren Faser (3) mindestens gleich dem
gesamten Durchmesser der Dickkernfaser (1) ist.

11. Koppler nach einem der Ansprüche 8 bis 10,
d a d u r c h   g e k e n n z e i c h n e t , daß die
weitere Faser (3) an die Dickkernfaser (1) angeklebt
ist.

12. Koppler nach einem der vorhergehenden Ansprüche,
d a d u r c h   g e k e n n z e i c h n e t , daß an
eine gemeinsame Stirnfläche (12, 13), insbesondere an
die gemeinsame Stirnfläche (12) der Dickkernfaser (1)
und dünneren Faser (2), ein weiteres Stück (4) einer
Dickkernfaser mit dem gleichen Durchmesser optimal
anjustiert und angeklebt ist.

13. Verfahren zur Herstellung eines Kopplers nach einem
der vorhergehenden Ansprüche, d a d u r c h
g e k e n n z e i c h n e t ,   daß die angeschliffene
Dickkernfaser (1) mit der dünneren Faser (2) oder auch
weiteren, gegebenenfalls angeschliffenen Faser (3) fest
verbunden und die Enden der verbundenen Fasern (1, 2; 2,
3) bis auf die richtigen Abmessungen abgeschliffen
werden.

14. Verfahren nach Anspruch 13, d a d u r c h
g e k e n n z e i c h n e t , daß beim Abschleifen der
Enden der verbundenen Fasern (1, 2; 2, 3) Steckertoleranzen berücksichtigt werden.

15. Verfahren nach Anspruch 13 oder 14, d a d u r c h
g e k e n n z e i c h n e t , daß die Dickkernfaser (1) und eine mit ihr zu verbindende Faser (2, 3) in einer Nut je eines Trägerkörpers (T1, T2) befestigt werden, daß ein erforderlicher Faseranschliff durch Anschleifen des betreffenden Trägerkörpers vorgenommen wird, daß dann die zu verbindenden Fasern durch Aufeinandersetzen und Verbinden der betreffenden Trägerkörper miteinander verbunden werden, und daß dann die Enden der verbundenen Fasern durch Abschliff der betreffenden Seite der miteinander verbundenen Trägerkörper abgeschliffen werden.

16. Verfahren nach Anspruch 15, d a d u r c h  g e k e n n z e i c h n e t , daß auf dem Trägerkörper (T1) für die Dickkernfaser (1) mehrere Dickkernfasern in parallelen Nuten befestigt werden, daß auch auf dem Trägerkörper (T2) für die zu verbindende Faser (2, 3) mehrere zu verbindende Fasern in parallelen Nuten befestigt werden, wobei auf beiden Trägerkörpern (T1, T2) der Abstand der Nuten voneinander gleich ist, so daß beim Zusammensetzen der Körper jede Dickkernfaser (1) mit je einer zu verbindenden Faser (2, 3) verbindbar ist.

17. Verfahren nach Anspruch 15 oder 16, d a d u r c h  g e k e n n z e i c h n e t ,  daß als Trägerkörper (T1, T2) ein durch einen Glaskörper verstärktes Siliziumplättchen verwendet wird, in das V-förmige Nuten geätzt werden, in welche die Fasern eingelegt und eingeklebt werden, wobei zumindest im Falle eines erforderlichen Schrägschliffes ein dünnes Glasplättchen als Abdeckung vorgesehen ist.

18. Verfahren nach einem der Ansprüche 15 bis 17, d a d u r c h  g e k e n n z e i c h n e t ,  daß als Trägerkörper (T1, T2) ein Glaskörper oder plastisch verformbarer Körper verwendet wird, in welchen die Nuten gesägt, geritzt oder geprägt oder durch Präzisionsheißpressen von Glas eingebracht werden.

19. Verfahren nach Anspruch 18, d a d u r c h
g e k e n n z e i c h n e t , daß der durch Präzisions-
Heißpressen von Glas hergestellte Trägerkörper gleichzeitig Formzapfen aufweist, durch die eine nachträgliche
Justierung von Flanschen beim Einbau des Kopplers in ein
Gehäuse entfallen kann.

FIG 1

FIG 2

FIG 3

# FIG 4

# FIG 5